# EUROPEAN PATENT APPLICATION

(11) **EP 1 503 074 A1**
(43) Date of publication of application: **02.02.2005**
(21) Application number: 04017678.6
(22) Date of filing: 26.07.2004
(51) Int. Cl.: F02N 11/04, H03K 17/082, H02J 7/14

(54) **Drive circuit for rotating electric device and electrical unit for vehicle**

(30) Priority: 28.07.2003 JP 2003202545
(71) Applicant: TOYOTA JIDOSHA KABUSHIKI KAISHA, Toyota-shi, Aichi-ken 471-8571 (JP)
(72) Inventor: Kusumi, Hidetoshi c/o Toyota Jidosha Kabushiki, Aichi-ken 471-8571 (JP); Mitai, Kentarou c/o Denso Corporation, Aichi-Pref 448-8661 (JP)
(74) Representative: KUHNEN & WACKER

(57) **Abstract**

A drive circuit for a rotating electric device (3000) is provided, which is installed in a vehicle including an idling stop system for temporarily stopping an engine (100) when a vehicle state satisfies a predetermined condition, and which has a function of restarting the engine (100) after the engine (100) is temporarily stopped, or a function of generating electric power when regenerative braking is performed in the vehicle. The rotating electric device (3000) is driven by the drive circuit. The drive circuit includes a control circuit (3110) that includes an MOS (Metal-Oxide Semiconductor), and that controls a phase to which electric current is applied, the electric current being supplied to the rotating electric device (3000), and a surge absorption circuit (3118) that is provided between a gate and a drain of the MOS. The drive circuit makes it possible to realize the idling stop system at low cost.

## Description

### BACKGROUND OF THE INVENTION

### 1. Field of the Invention

The invention relates to electric equipment installed in a vehicle including an engine and a motor-generator which uses a battery as a power source. More particularly, the invention relates to a drive circuit for a rotating electric machine such as a motor-generator installed in a vehicle in which an engine is stopped as much as possible during idling for preventing global warming and conserving resources.

### 2. Description of the Related Art

For the purpose of preventing global warming and conserving resources, an idling stop system is placed into practical use. In the idling stop system, an engine is automatically stopped when a vehicle is stopped at an intersection or the like at a red light, and the engine is restarted when a driver performs an operation for restarting running (for example, when the driver depresses an accelerator pedal, stops depressing a brake pedal, or moves a shift lever to a forward running position). The idling stop system is also referred to as "economy running system", and "engine automatic stop and start system". Hereinafter, this system will be referred to as "economy running system" in some cases. In this system, a secondary battery such as a lead battery or a lithium battery is installed in order to supply electric power to auxiliary machines (an air conditioner, a head lamp, an audio system, and the like) while the vehicle is stopped. While the vehicle is stopped, the secondary battery supplies electric power to the auxiliary machines. Also, when the engine is restarted, a crank shaft is rotated by an electric motor such as a motor-generator or a starter motor using electric power from the secondary battery, whereby the engine is restarted.

When the engine is restarted using the motor-generator, the motor-generator needs to provide both performance as an electric motor for starting the engine when the engine is restarted, and performance as a generator. Hereinafter, the performance will be described in detail.

Such a motor-generator needs to provide high performance as the electric motor for starting an internal combustion engine (hereinafter, referred to as "starting electric motor''). Therefore, in the motor-generator, the coil winding specification needs to be decided giving priority to generating high torque by applying sufficiently large electric current to an armature coil when the internal combustion engine is started. As a result, the armature coil needs to have low resistance and low inductance. When used as the electric motor, the motor-generator thus configured provides high performance as the starting electric motor generating high torque.

Meanwhile, in the case where the motor-generator is operated as a magnetogenerator after the internal combustion engine is started, it is difficult to generate sufficient electric power output. Since the coil winding specification is decided as described above, the output required for charging the battery cannot be obtained unless the engine speed of the internal combustion engine increases. That is, when the motor-generator whose coil winding specification is suitable as the starting electric motor is operated as the magnetogenerator, the electric power output required for charging the battery cannot be obtained in a low speed region of the internal combustion engine according to the output electric current-engine speed characteristics thereof. Further, the output becomes excessive when the engine speed of the internal combustion engine is high, and the battery is overcharged.

The characteristics of the electric generator which is required for charging the battery are characteristics in which the output rises in a low engine speed region of the internal combustion engine, and the output reaches a saturation level and is limited when the engine speed is high. In order to obtain such characteristics, the inductance needs to be increased by increasing the winding number of the armature coil. Therefore, this coil winding specification is not compatible with the coil winding specification required for the starting electric motor.

The coil winding specification required for obtaining necessary characteristics are quite different between the starting electric motor and the magnetogenerator for charging the battery. Therefore, it is difficult to use one motor-generator including a magnetic rotor and a multiple phase armature coil both as a brushless direct-current electric motor and the magnetogenerator for charging the battery.

In order to solve such a problem, Japanese Patent Laid-Open Publication No. 2000-209891 discloses a motor-generator for an internal combustion engine which can provide high torque necessary for starting the internal combustion engine when operated as a starting electric motor when the internal combustion engine is started, and which can generate high output even in a low engine speed region of the internal combustion engine when operated as a magnetogenerator after the internal combustion engine is started. In the motor-generator for an internal combustion engine, main poles composed of permanent magnets and interpoles made of material having a high magnetic permeability are alternately provided in a magnetic rotor fitted to an output shaft of the internal combustion engine. When the internal combustion engine is started, drive electric current is supplied to an armature coil Lu to Lw from a battery through an inverter circuit while each main pole and an interpole on an advance side of each main pole constitute one rotor magnetic pole. Thus, the motor-generator is operated as the electric motor. After the internal combustion engine is started, control electric current is supplied to the armature coil from the battery through the inverter circuit while each main pole and an interpole on the delay side of each main pole constitute one rotor magnetic pole. Thus, the motor-generator is operated as the magnetogenerator so as to generate output for charging the battery.

In the case of the motor-generator for an internal combustion engine disclosed in the Japanese Patent Laid-Open Publication No. 2000-209891, when operated as a brushless direct current electric motor, a control phase angle α is delayed and the magnitude of the angle is appropriately adjusted, whereby sufficient output torque for starting the internal combustion engine can be obtained, and the internal combustion engine can be started without causing trouble. The control phase angle α is a phase difference between a reference excitation phase change position detected by a position detecting device and a rotation angle position of the rotor when changing a phase of the armature coil to which the drive electric current is supplied, the rotation angle position being an actual excitation phase change position. Also, in the case where the motor-generator is operated as the magnetogenerator, when a switch element of the inverter circuit is controlled to be turned on and off while the excitation phase change position is set to a position which is advanced with respect to the reference excitation phase change position by a predetermined control phase angle α, the output of the magnetogenerator is increased by increasing the magnetic flux of the magnetic pole of each rotor using armature reaction magnetomotive force which is generated due to an electric current supplied to the armature coil from the battery through the inverter circuit. Accordingly, even in the case where the armature coil is wound so as to have low resistance and low inductance in order that the motor-generator can serve as the electric motor for starting the internal combustion engine, when the motor-generator is operated as the magnetogenerator, the magnetogenerator can generate sufficiently large output, and charging electric current can be supplied to the battery even in the low engine speed region of the internal combustion engine.

However, an input capacitor (referred to also as "smooth capacitor" or "high-pressure capacitor") needs to be provided in an inverter which drives a motor-generator for an internal combustion engine disclosed in Japanese Patent Laid-Open Publication No. 2000-209891. The capacitor needs to have at least a capacity which can absorb a generated surged voltage. In general, in the case of the inverter installer in a vehicle, the input capacitor which is used has a large capacity, and may have a capacity of several thousand µF. When the vehicle is driven, voltage is constantly applied to the input capacitor, and the input capacitor is used for repeatedly performing charging/discharging. When the vehicle is stopped, a relay disposed between the inverter and a direct current power source is opened, and control of the inverter is stopped at the same time.

Since the input capacitor having such a large capacity is provided, it is not possible to provide a device which can be applied to an idling stop system that can be realized at low cost. Accordingly, hereinafter, the idling stop system that can be realized at low cost will be examined.

When realizing the idling stop system at low cost, the following design policy is employed. The power source for the electric motor which restarts the engine needs to be only one battery (for example, a low-cost 14-volt lead battery which is widely used). A motor-generator which is connected to a crank shaft of the engine via a belt needs to be used for restarting the engine. In the motor-generator, abnormal noise is not caused by engagement of gears unlike a starter motor. Further, the start responsiveness of the motor-generator is better than that of the starter motor. The motor-generator and a PCU (Power Control Unit) including an inverter circuit which is a drive circuit therefor needs to be provided at the lowest possible cost.

In order to provide the motor-generator and the PCU at low cost, a low-cost alternator which is commonly and widely used in a vehicle is modified (for example, an armature portion and a rotor portion of the alternator are used as they are, and a rectifier circuit is replaced by the inverter circuit), or an air-cooled PCU is provided instead of a water-cooled PCU.

In the case where such a system is realized, when the engine in the idling stop system is restarted, it is preferable to use the motor-generator for restarting the engine in the idling stop system, since abnormal noise is not generated and the responsiveness is high. Meanwhile, the armature portion, the rotor portion, and the like of the general-purpose alternator are used and driven as a motor so as to perform cranking of the engine. Since the cranking requires extremely large torque, the engine is restarted under a severe condition for the low-voltage battery, the general-purpose alternator, and the air-cooled PCU.

In such cases, if a capacitor having a large capacity is provided in the inverter circuit as in the aforementioned Japanese Patent Laid-Open Publication No. 2000-209891, the cost of the inverter circuit which is a drive circuit for the motor-generator increases.

Accordingly, in order to realize the idling stop system at low cost, the configuration of the inverter circuit needs to be simplified without using the capacitor having a large capacity, and the drive circuit for the motor-generator (included in the PCU) needs to be provided at the lowest possible cost.

Also, control of electric current and torque of the motor-generator can be performed by performing PWM control (Pulse Width Modulation control; electric current feed back control) of the inverter circuit. However, the capacity of the input capacitor needs to be increased for supplying electric current instantaneously and suppressing the surged voltage. This is because the electric current is not supplied from the battery in time due to the internal resistance and the wiring resistance at the moment when MOS_FET (Metal-Oxide Semiconductor_Field Effect Transistor) is turned on. Therefore, the capacitor for supplying electric current instantaneously, which has a large capacity, is necessary.

Particularly, in the case of the PWM control, since the switching frequency of the MOS_FET is high, the necessity of supplying electric current instantaneously is large, and accordingly the capacity of the input capacitor tends to increase. Also, in the PWM control, since all the MOS_FETs are turned off (electric current = 0A), the time-rate-of-change of the electric current (di/dt) is high, and accordingly the surged voltage (V=L · (di/dt)) is high. In order to absorb the surged voltage, the capacity of the capacitor needs to be increased, which results in an increase in cost. In addition, it is difficult to integrate the motor-generator with the inverter which is a drive circuit, and to reduce the size thereof.

### SUMMARY OF THE INVENTION

In order to solve the aforementioned problems, it is an object of the invention to provide a small and low-cost drive circuit for a rotating electric device and a small and low-cost electrical unit for a vehicle, which are installed in a vehicle in order to realize an idling stop system.

Accordingly, a first aspect of the invention relates to a drive circuit for a rotating electric device which is installed in a vehicle including an idling stop system for temporarily stopping an engine when a vehicle state satisfies a predetermined condition, and which has a function of restarting the engine after the engine is temporarily stopped, or a function of generating electric power when regenerative braking is performed in the vehicle. The rotating electric device is driven by the drive circuit. The drive circuit includes a control circuit that includes an MOS (Metal-Oxide Semiconductor), and that controls a phase to which electric current is applied, the electric current being supplied to the rotating electric device, and a surge absorption circuit that is provided between a gate and a drain of the MOS.

In the aforementioned drive circuit for a rotating electric device, when the surged voltage is generated, the surged voltage is absorbed by the MOS itself, instead of the input capacitor, using a surge absorption circuit including a diode, which is provided between the gate and the drain of the MOS. Therefore, the capacitor having a large capacity is not necessary. As a result, it is possible to provide the drive circuit for a rotating electric device which is installed in a vehicle in order to realize a low-cost idling stop system.

Also, the surge absorption circuit may include a backflow prevention diode and a zener diode.

With this configuration, the generated surged voltage is absorbed using the surge absorption circuit which includes the backflow prevention diode and the zener diode.

Also, the control circuit may drive the rotating electric device by changing a phase to which electric current is applied among plural phases using the MOS, the electric current being supplied to the rotating electric device.

With this configuration, the control circuit performs phase control which drives the rotating electric device by changing the phase to which electric current is applied among the plural phases (for example, three phases), the electric current being supplied to the rotating electric device, and does not perform the PWM control (electric current feed back control). Therefore, an electric current sensor, a PWM switching circuit, and the like which are used for performing the electric current feed back control are not necessary, and accordingly, it is possible to provide the idling stop system which can be realized at low cost.

Also, in the drive circuit for a rotating electric device, the rotating electric device may be a motor-generator, and the drive circuit may be an inverter circuit.

With this configuration, it is possible to realize the idling stop system in which the rotating electric device is the motor-generator, and the drive circuit is the inverter circuit that supplies three-phase electric power to the motor-generator.

Further, in the drive circuit for a rotating electric device, the armature and the rotor of the motor-generator may be components of an alternator, and the inverter circuit may be an air-cooled inverter circuit.

With this configuration, since the motor-generator is produced using the components of the alternator, the motor-generator can be produced at low cost. Further, since the air-cooled inverter circuit is employed instead of a water-cooled inverter circuit, the inverter circuit can be produced at low cost.

Another aspect of the invention relates to an electrical unit for a vehicle in which the drive circuit for a rotating electric device and the rotating electric device are integrated.

With this configuration, it is possible to provide a small and low-cost electrical unit (motor-generator unit) for a vehicle, in which a rotating electric device portion and a drive circuit therefor are integrated, and which makes it possible to realize the idling stop system at low cost.

### BRIEF DESCRIPTION OF THE DRAWINGS

The above mentioned and other objects, features, advantages, technical and industrial significance of this invention will be better understood by reading the following detailed description of exemplary embodiments of the invention, when considered in connection with the accompanying drawings, in which:
FIG. 1 is a control block diagram showing a vehicle according to an embodiment of the invention;
FIG. 2 is a diagram showing a configuration of a motor-generator in FIG. 1;
FIG. 3 is a diagram showing an electric circuit for a motor-generator and an inverter circuit;
Each of FIG. 4A and FIG. 4B is a diagram showing an output electric current waveform and timing of charging/discharging of an input capacitor;
FIG. 5 is a diagram showing changes in input voltage in the case where PWM control is performed and in the case where PWM control is not performed;
FIG. 6A is a diagram showing timing at which three-phase electric power is output in the case where the PWM control is performed;
FIG. 6B is a diagram showing timing at which three-phase electric power is output in the case where the PWM control is not performed;
FIG. 7 is a diagram showing changes in surged voltage in the case where the PWM control is performed and in the case where the PWM control is not performed;
FIG. 8 is a diagram showing an effect of reducing the surged voltage due to an increase in MOS gate resistance; and
FIG. 9 is a diagram showing the effect of reducing the surged voltage using a Vds waveform of the MOS.

### DETAILED DESCRIPTION OF THE PREFERRED EMBODIMENTS

In the following description and the accompanying drawings, the present invention will be described in more detail in terms of exemplary embodiments. In the following description, the same components are denoted by the same reference numerals. The names and the functions thereof are the same. Accordingly, detailed description thereof will not be repeated.

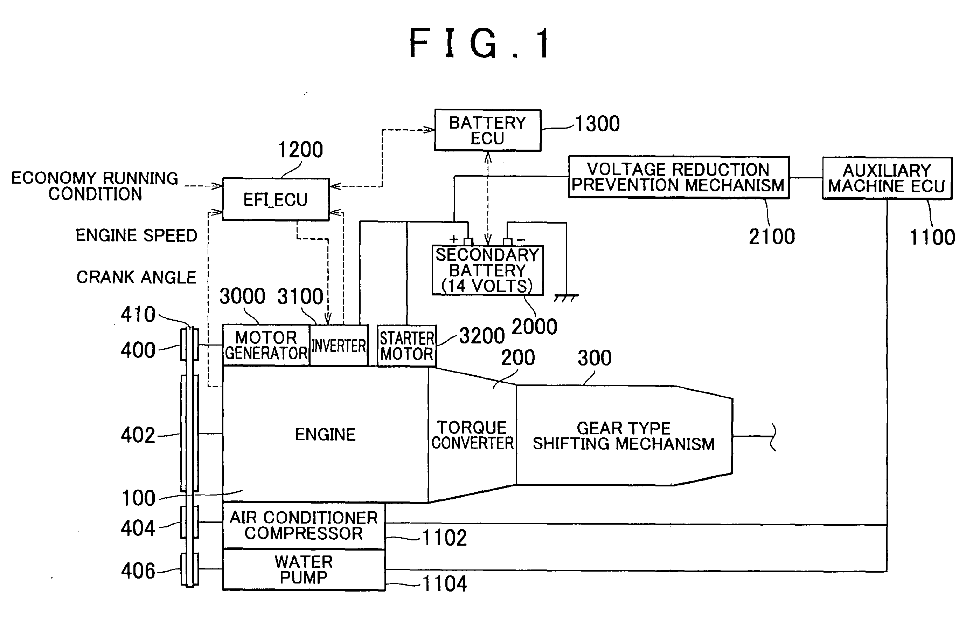

Referring to FIG. 1, a control block diagram showing a vehicle according to an embodiment of the invention will be described. In the following description, a power train in the vehicle includes a torque converter and a gear type shifting mechanism. However, the invention is not limited to this power train. For example, the invention can be applied to a CVT (Continuously Variable Transmission) of belt type or toroidal type.

As shown in FIG. 1, the power train in the vehicle includes an engine 100 which is a commonly-used internal combustion engine; a torque converter 200 which is connected to an output shaft of the engine 100, and which has a function of amplifying torque using fluid; and a gear type shifting mechanism 300 which is connected to an output shaft of the torque converter 200. A crank shaft pulley 402 of the engine 100 is connected to a motor-generator pulley 400 of a motor-generator 3000, an air conditioner compressor pulley 404 of an air conditioner compressor 1102, and a water pump pulley 406 of a water pump 1104 via a belt 410.

The vehicle controls the engine 100 using an EFI_ECU (Electronic Fuel Injection_Electronic Control Unit) 1200, and performs the idling stop system. When a state quantity of the vehicle concerning an economy running condition input to the EFI_ECU 1200 satisfies a predetermined economy running condition, the idling stop system transmits, to the HV_ECU (not shown), the information that a condition for idling stop is satisfied. When the economy running condition is not satisfied, the EFI_ECU 1200 supplies electric power from a secondary battery 2000 to the motor-generator 3000 through an inverter 3100. Then, the EFI_ECU 1200 causes the motor-generator 3000 to function as the motor, and causes the crank shaft pulley 402 of the engine 100 to rotate via the motor-generator pulley 400 and the belt 410 so as to restart (crank) the engine 100. The inverter 3100 is an air-cooled inverter, and various command signals are input to the EFI_ECU 1200.

The EFI_ECU 1200 controls an electric current value of field current If of the motor-generator 3000 using the command signal to the inverter 3100. Also, various signals indicating abnormality of the inverter circuit or the like are input from the inverter 3100 to the EFI_ECU 1200.

A commonly used lead battery whose rated voltage is 14 volts is used as the secondary battery 2000. The secondary battery 2000 is controlled by a battery ECU 1300. Electric power is supplied to the inverter 3100 and a starter motor 3200 from the secondary battery 2000, and the engine 100 is restarted by the motor-generator 3000 or the starter motor 3200 after idling stop. When an ignition switch is at a start position, the engine 100 is normally started by the starter motor 3200.

The secondary battery 2000 is connected to an auxiliary machine ECU 1100 via a voltage reduction prevention mechanism 2100 (for example, a backup boost converter, a capacitor, a lithium battery, or the like). The auxiliary machine ECU 1100 is connected to the air conditioner compressor 1102 and the water pump 1104, and the auxiliary machine ECU 1100 controls the air conditioner compressor 1102 and the water pump 1104. Since the engine 100 is stopped during idling stop, it is not possible to rotate the air conditioner compressor pulley 404 and the water pump 1104 via the crank shaft pulley 402 of the engine 100 using the belt 410. Therefore, the auxiliary machine ECU 1100 controls the air conditioner compressor 1102 and the water pump 1104 to be driven using the electric power from the secondary battery 2000.

An oil pump (not shown) is also operated using the secondary battery 2000 during idling stop as in the case of the water pump 1104.

The engine compressor 1102 has a function of selecting whether to drive the engine compressor 1102 using the engine compressor pulley 404, or to drive the engine compressor 1102 using the motor driven by electric power from the secondary battery 2000. The water pump 1104 has a function of selecting whether to drive the water pump 1104 using the water pump pulley 406, or to drive the water pump 1104 using the motor driven by electric power from the secondary battery 2000. Also, instead of the function, an electromagnetic clutch may be provided in the crank shaft pulley 402 of the engine 100. In this case, the electromagnetic clutch is placed in a non-transmission state such that the engine 100 is separated and the motor-generator 3000 operates the air conditioner compressor 1102 and the water pump 1104.

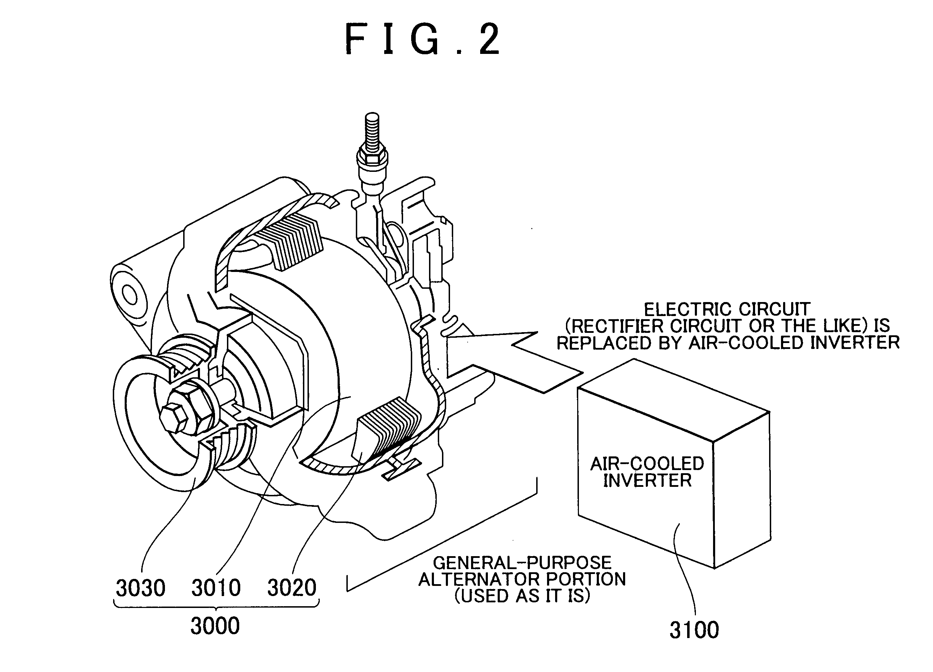

FIG. 2 shows a configuration of the motor-generator 3000 shown in FIG. 1. As shown in FIG. 2, the motor-generator 3000 used in the vehicle according to the embodiment of the invention is a low-cost motor-generator in which components of a general-purpose alternator are used.

In general, the alternator is rotated by a pulley 3030 connected to the crank shaft pulley 402 of the engine 100 via the belt 410. When an alternator rotor portion 3010 is rotated, electric power generated in an alternator stator portion 3020 is changed from AC to DC using a rectifier circuit, and the generated electric power is supplied to the secondary battery 2000.

The general-purpose alternator is widely employed in a commonly used vehicle, and the production cost thereof is extremely low. The alternator rotor portion 3010 and the alternator stator portion 3020 are used as the rotor portion and the stator portion of the motor-generator 3000 according to the embodiment of the invention. The pulley 3030 shown in FIG. 2 is the same as the motor-generator pulley 400 shown in FIG. 1.

Instead of the rectifier circuit, the inverter 3100 is used. The inverter 3100 is a driver which causes the alternator rotor portion 3010 and the alternator stator portion 3020 to function as the motor-generator 3000. The inverter 3100 is an air-cooled inverter. Since the air-cooled inverter is employed, the cost is reduced as compared to the case where the water-cooled inverter is employed. As shown in FIG. 2, the motor-generator which is the rotating electric machine and the air-cooled inverter which is the drive circuit are integrated, whereby the electrical unit is formed.

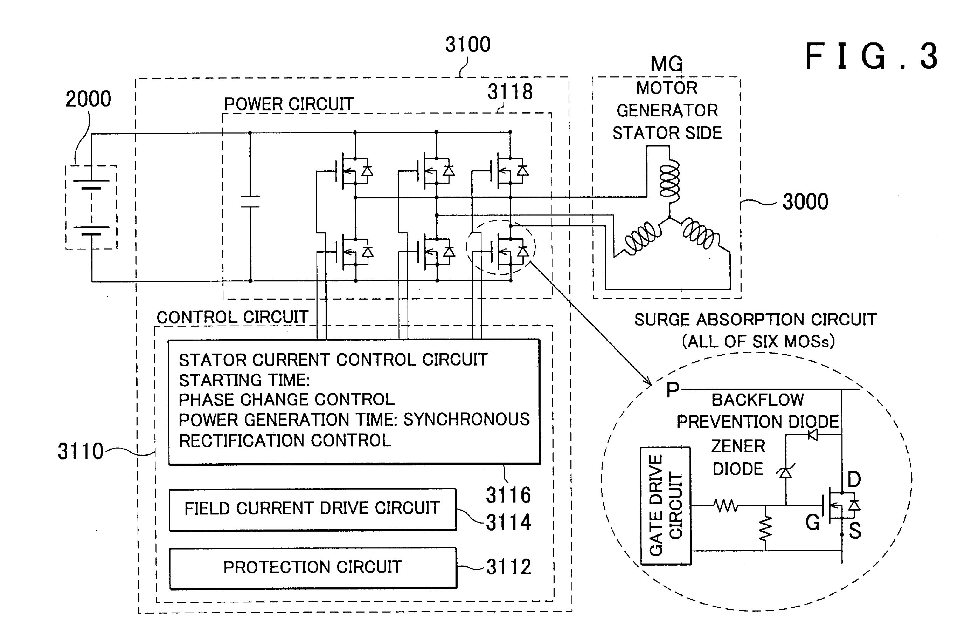

FIG. 3 is a diagram showing an electric circuit including the secondary battery 2000, the motor-generator 3000, and the inverter 3100. As shown in FIG. 3, the inverter 3100 includes a power circuit 3118 including a power element (MOS_FET), and a control circuit 3110 which controls the power circuit 3118 based on a command signal from the EFI_ECU 1200.

The power circuit 3118 includes an inverter circuit which is configured to supply three-phase electric power to the alternator stator portion 3020 using plural (six) switching circuits. In the power circuit 3118, phase change control (phase control) is performed by a stator current control circuit 3116 of the control circuit 3110 when the engine 100 is restarted, and synchronous rectification control is performed by the stator electric current control circuit 3116 when electric power is generated.

Also, since the field current If flowing in the alternator rotor portion 3010 is controlled using a field current drive circuit 3114 of the control circuit 3110, torque generated by the motor-generator 3000 can be controlled when the motor-generator 3000 functions as the electric motor, and an amount of generated electric power can be controlled when the motor-generator 3000 functions as the generator.

The secondary battery 2000 supplies electric power to the power circuit 3118 of the inverter 3100, and supplies electric power to the alternator stator portion 3020 and the alternator rotor portion 3010.

A motor-generator selection signal and an RLO power generation command signal are input to the inverter 3100 from the EFI_ECU 1200. Also, when an abnormality (an abnormality concerning the temperature of the power circuit 3118, or the like) occurs inside the inverter 3100, a protection circuit 3112 limits the function of the inverter 3100.

In the power circuit 3118, a fin for air cooling is provided, and a thermistor which measures the temperature of the fin is provided. An MOS temperature signal from the thermistor is input to the protection circuit 3112 of the control circuit 3110. In addition, an abnormality concerning the field current If of the alternator rotor portion 3010 (overheat of the magnetic field, magnetic field overcurrent, or the like) and motor lock are detected by the field current drive circuit 3114 and the stator current control circuit 3116, and an abnormality signal is transmitted to the protection circuit 3112. Based on these signals, for example, the protection circuit 3112 causes the inverter 3100 itself to perform a power generation prohibition process, or an idling stop prohibition (economy running prohibition) process. These processes for dealing with an abnormality are transmitted to the EFI_ECU 1200 in such a manner that they are distinguished from each other.

As the motor-generator selection command signal, a HIGH signal is input to the inverter 3100 from the EFI_ECU 1200 when the motor-generator 3000 functions as the electric motor, and a LOW signal is input to the inverter 3100 from the EFI_ECU 1200 when the motor-generator 3000 functions as the generator. Accordingly, the HIGH signal or the LOW signal is input to the inverter 3100. As the RLO power generation command signal, a signal indicating a power generation command value using a predetermined duty ratio is input to the inverter 3100 from the EFI_ECU 1200.

The stator current control circuit 3116 performs the phase change control instead of the PWM control that has been widely used conventionally. Therefore, the configuration is made such that the maximum electric current value of the power circuit 3118 when the MOS_FET is on does not exceed the maximum rated electric current value of the power element. The maximum electric current value is decided based on a resistance value of the stator winding wire of the motor-generator 3000, a resistance value of the wiring, or the like.

When the PWM control is performed, the capacity of the input capacitor needs to be increased since the necessity of supplying electric current instantaneously is large. In this embodiment, since the PWM control is not performed, the switching frequency of the MOS_FET is high, and accordingly the capacity of the input capacitor does not need to be increased.

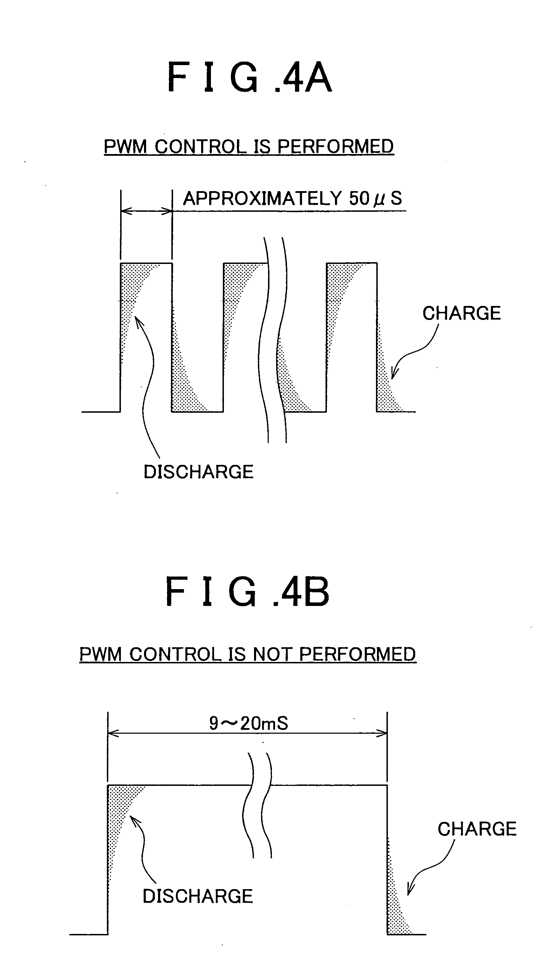

Each of FIG. 4A and FIG. 4B shows an output electric current waveform and timing of charging/discharging of the input capacitor. FIG. 4A shows the case where the PWM control is performed, and FIG. 4B shows the case where the PWM control is not performed. As shown in FIG. 4A and FIG. 4B, the switching frequency of the MOS_FET is extremely high in the case where the PWM control is performed as shown in FIG. 4A, as compared with the case where the PWM control is not performed as shown in FIG. 4B. Therefore, since the input capacitor is used for supplying electric current instantaneously, the input capacitor needs to have a large capacity.

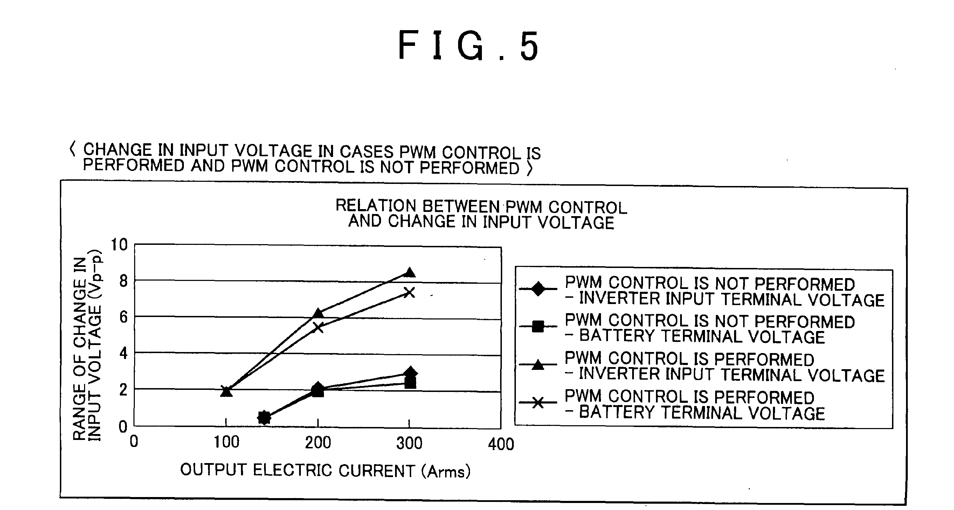

FIG. 5 shows a relation between the PWM control and the change in the input voltage. As described referring to FIG. 4A and FIG. 4B, in the case where the PWM control is not performed, the switching frequency is low, and accordingly the range of the change in the input voltage decreases. As a result, it is not necessary to supply electric current instantaneously (at the time of discharging). Accordingly, the input capacitor does not need to have a large capacity.

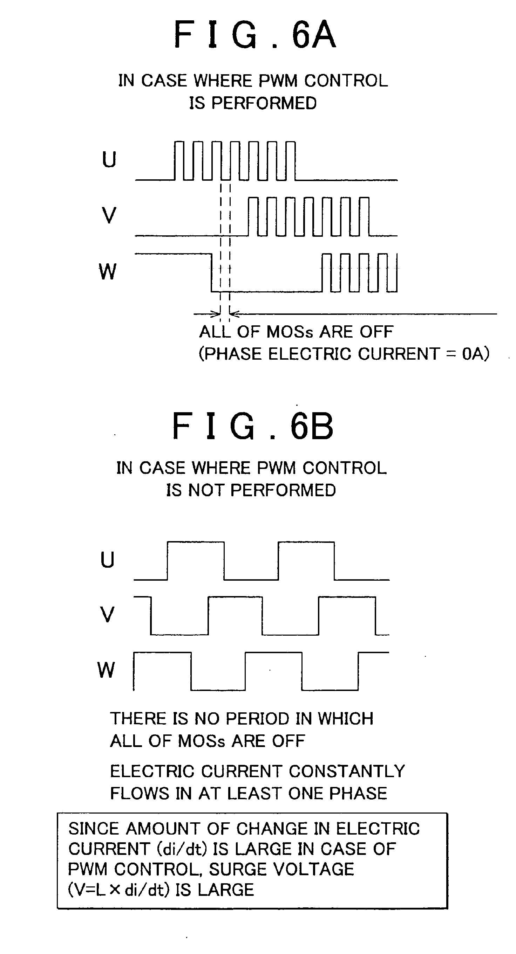

Each of FIG. 6A and FIG. 6B shows timing of output waveforms in three phases. FIG. 6A shows the case where the PWM control is performed, and FIG. 6B shows the case where the PWM control is not performed. As shown in FIG. 6, in the case where the PWM control is performed as shown in FIG. 6A, there is a period in which all the MOS_FETs are off. Meanwhile, in the case where the PWM control is not performed as shown in FIG. 6B, there is no period in which all the MOS_FETs are off. In other words, in the case where the PWM control is not performed as shown in FIG. 6B, electric current constantly flows in at least one of the three phases. Therefore, in the case where the PWM control is performed, since there is a period in which all the MOS_FETs are off (electric current = 0A), the time-rate-of-change of the electric current (di/dt) is high, and the surged voltage (V=L×(di/dt)) is high.

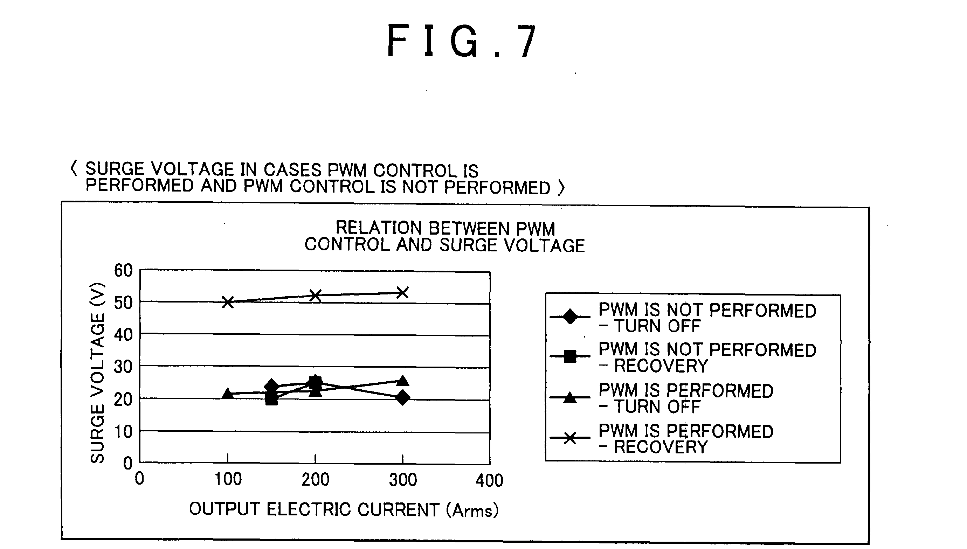

FIG. 7 shows a relation between the PWM control and the surged voltage. As described referring to FIG. 6, in the case where the PWM control is not performed, there is no period in which all the MOS_FETs are off (electric current = 0A), the time-rate-of-change of the electric current (di/dt) is low, and the surged voltage (V=L×(di/dt)) is low. Accordingly, it is not necessary to increase the capacity of the capacitor in order to absorb the surged voltage.

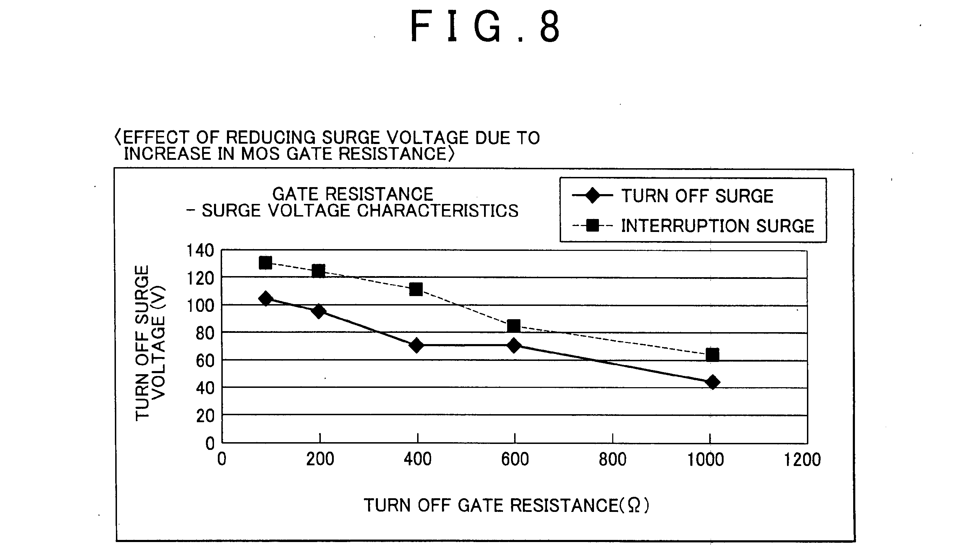

FIG. 8 shows the surged voltage when MOS gate resistance increases. In the inverter 3100, since the PWM control is not performed, a time period between turn-on and turn-off can be increased, which decreases a rate of switching loss. Thus, turn off gate resistance can be increased, and a switching surge (turn off surged voltage) can be decreased to the minimum value.

A surge absorption circuit will be described referring to FIG. 3 again. As shown in FIG. 3, the surge absorption circuit including a backflow prevention diode and a zener diode is provided between the gate and the drain of each of all the six MOS_FETs. In the surge absorption circuit, the zener diode is disposed in a forward direction from the gate side to the drain side, and the backflow prevention diode is disposed so as to be opposed to the zener diode in a direction from the drain side to the gate side. When the surged voltage is generated, the MOS_FET is turned on by the surge absorption circuit so as to absorb the generated surged voltage.

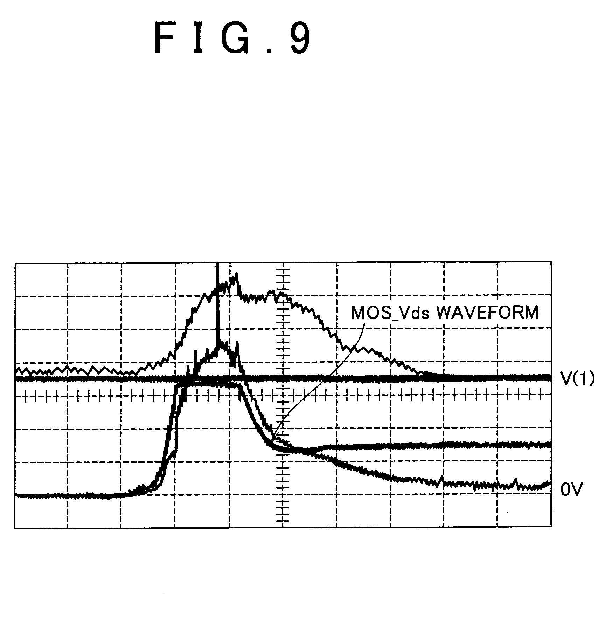

FIG. 9 shows a time-dependent change in the surged voltage. As shown in an MOS_Vds waveform in FIG. 9, the surged voltage is maintained at a value V (1), which shows that the surged voltage is absorbed.

The effect of maintaining the surged voltage as shown in FIG. 9 due to the configuration of the surge absorption circuit shown in FIG. 3 will be described. As shown in FIG. 3, when P voltage becomes higher than the zener voltage, the zener diode is brought into conduction in a backward direction. Therefore, the P voltage is applied to the gate, which turns the MOS_FET on. Thus, conduction is started and electric current flows between the drain (D) and the source (S), which decreases the P voltage.

When the P voltage becomes lower than the zener voltage, the zener diode is brought out of conduction. Therefore, the P voltage is no longer applied to the gate, which turns the MOS_FET off. Thus, conduction is interrupted between the drain (D) and the source (S), and electric current no longer flows, which increases the P voltage.

In reality, since balancing is performed between when the P voltage is higher than the zener voltage and when the P voltage is lower than the zener voltage, the P voltage is maintained at the zener voltage. In other words, the surged voltage can be suppressed to the zener voltage. More specifically, the surged voltage is maintained at a value obtained by summing a voltage reduction amount of the backflow prevention diode (approximately 0.7V) and a deviation of the zener voltage due to temperature characteristics.

When the MOS_FET is on, the voltage is applied to the gate (G) of the backflow prevention diode. However, in the case where the zener diode is inserted between the gate (G) and the drain (D) as shown in FIG. 3, since the zener diode is constantly brought into conduction in a forward direction, electric current flows from the gate to P when the gate voltage is higher than the P voltage. In this case, since the gate voltage is influenced by the change in the P voltage, the operation of the MOS_FET may become unstable. Therefore, the backflow prevention diode is inserted so as to interrupt communication between the gate (G) and the drain (D).

As described above, components of the alternator are used as the armature and the rotor of the motor-generator according to the embodiment of the invention. Also, the PWM control is not performed, and the phase control is performed in the inverter circuit. In the case where the surged voltage is generated, the MOS itself absorbs the surged voltage using the surged voltage absorption circuit including the diode, which is provided between the gate and drain of the MOS_FET that is the power element. Accordingly, the input capacitor having a large capacity is not necessary. As a result, it is possible to provide the rotating electric device and the drive circuit thereof, which are integrated so as to be small and low-cost, and are installed in a vehicle in order to realize an idling stop system.

## Claims

1. A drive circuit for a rotating electric device (3000) which is installed in a vehicle including an idling stop system for temporarily stopping an engine (100) when a vehicle state satisfies a predetermined condition, and which has a function of restarting the engine (100) after the engine (100) is temporarily stopped, or a function of generating electric power when regenerative braking is performed in the vehicle, **characterized in that**
the rotating electric device (3000) is driven by the drive circuit; the drive circuit includes a control circuit that includes a metal-oxide semiconductor, and that controls a phase to which electric current is applied, the electric current being supplied to the rotating electric device (3000), and a surge absorption circuit (3118) that is provided between a gate and a drain of the metal-oxide semiconductor.

2. The drive circuit for a rotating electric device according to claim 1, **characterized in that** the surge absorption circuit (3118) includes a backflow prevention diode and a zener diode.

3. The drive circuit for a rotating electric device according to claim 1 or 2, **characterized in that** the control circuit (3110) drives the rotating electric device (3000) by changing a phase to which electric current is applied among plural phases using the metal-oxide semiconductor, the electric current being supplied to the rotating electric device (3000).

4. The drive circuit for a rotating electric device according to any one of claims 1 through 3, **characterized in that** the rotating electric device (3000) is a motor-generator, and the drive circuit is an inverter circuit (3100).

5. The drive circuit for a rotating electric device according to claim 1, **characterized in that** an armature (3020) and a rotor (3010) of the motor-generator (3000) are components of an alternator, and the inverter circuit (3100) is an air-cooled inverter circuit.

6. An electrical unit for a vehicle, **characterized in that** the electrical unit for a vehicle is formed by integrating the drive circuit (3100) for a rotating electric device according to any one of claims 1 through 5 and the rotating electric device (3000).
